# EUROPÄISCHE PATENTSCHRIFT

(11) **EP 1 443 143 B1**
(45) Veröffentlichungstag und Bekanntmachung des Hinweises auf die Patenterteilung: **07.03.2012**
(21) Anmeldenummer: 03025886.7
(22) Anmeldetag: 12.11.2003
(51) Int. Cl.: D21C 5/02, D21C 9/08

(54) **Verfahren zur Entfernung von Störstoffen aus einer wässrigen Papierfasersuspension**
Method for removing contaminants from an aqueous fibrous suspension
Procédé pour élimination des contaminants d'une suspension aqueuse de fibres

(30) Priorität: 30.01.2003 DE 10303646
(43) Veröffentlichungstag der Anmeldung: 04.08.2004
(73) Patentinhaber: Voith Patent GmbH, 89522 Heidenheim (DE)
(72) Erfinder: Bätz, Elisabeth, 88273 Fronreute (DE); Gehr, Volker, Dr., 25348 Glückstadt (DE); Gutsmuths, Eckhard, 88213 Ravensburg (DE); Kemper, Martin, 88250 Weingarten (DE)

(56) Entgegenhaltungen:
- EP-A1- 0 537 416
- EP-A2- 1 270 804
- DE-A1- 4 215 532
- DE-A1- 10 043 893
- DE-A1- 10 132 743
- DE-A1- 19 728 393
- DE-A1- 19 736 143
- US-A- 5 417 806

## Beschreibung

Die Erfindung betrifft ein Verfahren zur Entfernung von Störstoffen aus einer wässrigen Papierfasersuspension gemäß dem Oberbegriff des Anspruchs 1.

Durch Flotation wird ein die auszuscheidenden Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so dass sie sich ausflotieren lassen. Der Flotationsvorgang nutzt die Unterschiede zwischen Papierfaserstoff und unerwünschten Störstoffteilchen in der Art, dass der Faserstoff auf Grund seines eher hydrophilen Charakters in der Papierfasersuspension verbleibt, während die angesprochenen Störstoffteilchen hydrophob sind und deshalb zusammen mit den Luftblasen in den Schaum gelangen. Weil dabei nicht alle Feststoffe ausflotiert, sondern Fasern von Verunreinigungen getrennt werden, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Papierfasersuspensionen verwendet. Solche Stoffe sind insbesondere Kleber, sogenannte Stickies, feine Kunststoffpartikel und eventuell auch Harze.

Ein Flotationsverfahren der hier beschriebenen Art arbeitet mit mehreren, vorzugsweise zwei nacheinander durchgeführten Flotationsschritten, was das Gesamtergebnis wesentlich verbessern kann. Dabei wird zumeist zwischen den Flotationsschritten eine Zwischenbehandlung durchgeführt, die dem Abtrennen weiterer Störstoffe von den Fasern dient. Ein typisches Beispiel ist die Dispergierung, eventuell kombiniert mit einer chemischen Behandlung.

Es ist an sich bekannt, wie eine Anlage zur Durchführung eines Flotationsschrittes so einzustellen ist, dass sie eine optimale Flotationswirkung erreicht, d.h. also, dass ein möglichst großer Anteil der in der zugeführten Papierfasersuspension enthaltenen flotierbaren Störstoffe entfernt wird. Die Einstellung wird in der Regel so vorgenommen, dass die Menge des Rejektes, der in einem Flotationsschritt abgeführt wird, so lange verändert wird, bis das gewünschte optimale Ergebnis erreicht ist. Dabei führt eine größere Rejektmenge zur Entfernung von mehr Störstoffen. Die konkret erzielte Flotationswirkung lässt sich z.B. durch Messung des Weißgrades, der Schmutzpunkte oder des Sticky-Gehaltes im Gutstoff feststellen. Bei realen Produktionsanlagen muss immer ein Faserverlust in Kauf genommen werden, da der Rejekt nicht völlig faserfrei anfällt.

Der Erfindung liegt die Aufgabe zu Grunde, das Verfahren so zu gestalten, dass eine gute Flotationswirkung des in mehreren Flotationsschritten arbeitenden Gesamtverfahrens erzielt wird und gleichzeitig die Faserverluste möglichst gering sind.

Diese Aufgabe wird durch die im Kennzeichen des Anspruchs 1 genannten Merkmale bereits vollständig gelöst.

Abweichend vom üblichen Vorgehen im Stand der Technik wird bei der Durchführung des neuen Verfahrens ein Flotationsschritt, dem noch wenigstens ein weiterer Flotationsschritt folgt, nicht bezüglich der Flotationswirkung optimiert. Stattdessen wird die Menge des Gesamtrejektes dieses Flotationsschrittes so weit zurückgenommen, dass ein Qualitätsverlust eintritt. So kann z.B. der bei einer Deinkingflotation erzielte Weißgradgewinn um drei ISO-Weißpunkte niedriger eingestellt werden als der ohne weiteres Erreichbare. Diese Maßnahme führt zu einer höheren Schmutzstoffbeladung des Rejektes, d.h. der Flotationsschaum enthält einen größeren Anteil an Störstoffen und einen geringeren Anteil an Fasern. Der im ersten Flotationsschritt gewonnene Flotationsgutstoff gelangt mit einem höheren Störstoffgehalt in den stromabwärts folgenden Flotationsschritt. Um die erwähnten Qualitätsverluste auszugleichen, kann nun im zweiten Flotationsschritt mit einer höheren Überlaufrate flotiert, also eine größere Rejektmenge abgezogen werden.

Auch bei einer Dispergierung des Faserstoffs zwischen den Flotationsschritten entwickelt das Verfahren seine Vorteile. Es hat sich nämlich herausgestellt, dass die vorher schon durchgeführte Flotation in jedem praktischen Fall ausreicht, um Nachteile durch das Dispergieren auszuschließen. Außerdem liefert das Verfahren besonders gute Ergebnisse, wenn die Faserstoffsuspension durch Auflösen in einer Auflösetrommel erzeugt wird, die - wie z.B. die DE 197 36 143 A1 zeigt - mit einem feststehenden innen liegenden Verdrängungskörper versehen ist. Eine solche Auflösung führt zu einer besonders effektiven Ablösung der Störstoffe (Farbpartikel) von den Fasern, so dass der erste Flotationsschritt auch bei reduzierter Rejektmenge ein akzeptables Ergebnis liefert.

Betrachtet man das Gesamtverfahren, das sich aus mehreren nacheinander folgenden Flotationsschritten zusammensetzt, wird ein Gutstoff mit gleicher Flotationsqualität, d.h. Sauberkeit gewonnen, die Verluste an Fasern sind mit dem neuen Verfahren aber deutlich geringer. Verfahrenstechnisch betrachtet ist das so zu erklären, dass im Rejekt des stromaufwärtigen Flotationsschrittes zwar weniger Schmutz, dieser aber mit einem höheren Schmutz/Faserverhältnis als bei bekannten Verfahren abgeführt wird. Es hat sich auch gezeigt, dass im zweiten Flotationsschritt nicht in demselben Maße mehr Rejekt abgezogen werden muss, wie es der Reduzierung des Rejektes im ersten Flotationsschritt entspricht. Insgesamt wird also ohne nennenswerten Mehraufwand eine entscheidende Verbesserung des Verfahrens erreicht, wenn man nicht nur die erzielte Sauberkeit, sondern auch die Menge der Faserverluste berücksichtigt. Anzumerken ist, dass bei der Verlustbilanz auch die sogenannte Asche (mineralische Feinstoffe) eine Rolle spielen kann. Geringerer Faserverlust des Verfahrens bedeutet zumeist auch weniger Asche im Rejekt. Das senkt die Deponiekosten. In vielen Fällen ist auch der damit verbundene höhere Aschegehalt im Gutstoff durchaus erwünscht.

Die Erfindung und ihre Vorteile werden erläutert an Hand von Zeichnungen. Dabei zeigen:
- Fig. 1: ein Verfahrensschema mit zwei Flotationsschritten;
- Fig. 2: zwei Diagramme zur Erläuterung der durch das Verfahren erzielten Wirkungen;
- Fig. 3: grob schematisch - eine Anlage zur Durchführung des Verfahrens.

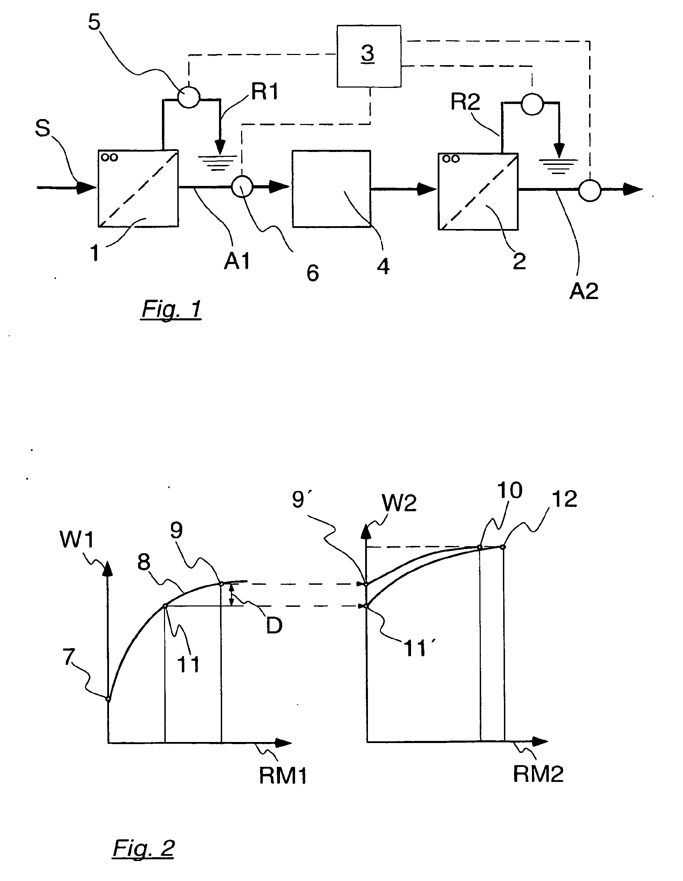

Gemäß Fig. 1 wird die Papierfasersuspension S, die z.B. aus aufgelöstem und vorgereinigtem Altpapier besteht, zunächst einem Flotationsschritt 1 unterzogen. Die hierzu benötigten Vorrichtungen bzw. Anlagen sind bekannt. Die Flotation dient dazu, eine Anreicherung von Störstoffen im Rejekt R1 herbeizuführen und einen von solchen Störstoffen zumindest teilweise gereinigten Gutstoff A1 zu bilden. Wie später noch gezeigt wird, kann ein solcher Flotationsschritt vorteilhafterweise auch in mehreren Stufen durchgeführt werden. Der Gutstoff A1 gelangt bei dem hier gezeigten Beispiel in eine Dispergeranlage 4 und dann in einen weiteren Flotationsschritt 2, indem wiederum ein Rejekt R2 sowie ein Gutstoff A2 gebildet werden. Der Gutstoff A2 ist ausreichend von flotationsfähigen Störstoffen gereinigt. Wenn nicht, kann er in einem dritten, hier nicht gezeigten Flotationsschritt bearbeitet werden. Bei mehr als zwei Flotationsschritten wird man z.B. den ersten mit höherem Qualitätsverlust durchführen als den zweiten. Im letzten Flotationsschritt werden dann die aufgetretenen Qualitätsverluste durch eine erhöhte Rejektmenge wieder ausgeglichen.

Die zur Steuerung oder Regelung von Flotationsanlagen benötigten Maßnahmen sind an sich bekannt. Bei dem hier beschriebenen Verfahren wird die Menge der Rejekte R1 und R2 so eingestellt, dass die in den Patentansprüchen genannten Bedingungen erfüllt sind. Hierzu kann ein Regler 3 verwendet werden, was zwar günstig, aber auch aufwändig und nicht immer erforderlich ist. Die notwendigen Einstellungen können nämlich auch sehr einfach manuell vorgenommen werden. Symbolisch ist hier eine Mengenregelung 5 für den Rejekt R1 und eine Weißgradmessung 6 für den Gutstoff A2 eingezeichnet. Ähnliche Regelungskonzepte sind auch bei der Durchführung des zweiten Flotationsschrittes 2 denkbar.

In Fig. 2 ist ein zweiteiliges Diagramm dargestellt, bei dem die in einer Flotationsanlage erzielbaren Flotationswirkungen in Abhängigkeit von der abgezogenen Rejektmenge dargestellt sind. Als Beispiel wird hier der im ersten Flotationsschritt erzielte Weißgrad W1 aufgetragen über die im ersten Flotationsschritt entnommene Rejektmenge RM 1. Den Ausgangswert vor der Flotation der Papierfasersuspension S zeigt der Startpunkt 7. Bekanntlich steigt der Weißgrad mit zunehmender Rejektmenge, was hier durch eine Diagramm-Kurve 8 dargestellt ist. Der Arbeitspunkt 9 zeigt eine übliche bekannte Fahrweise, bei der ein möglichst hoher Weißgrad erzielt wird. Beim neuen Verfahren hingegen arbeitet der erste Flotationsschritt im Arbeitspunkt 11, bei dem die Rejektmenge RM 1 wesentlich geringer ist (hier ist es etwa die Hälfte) und sich ein deutlich erkennbarer Verlust D an Störstoffentfernung einstellt, was sich im geringeren Weißgrad W1 äußert. Der rechte Teil dieser Figur zeigt ein zweites Diagramm, das die Verhältnisse im zweiten Flotationsschritt 2 wiedergibt. Dabei wird im neuen Verfahren der Weißgrad W2, ausgehend vom zweiten Startpunkt 11', der dem Einlauf in die entsprechende Flotationsvorrichtung entspricht, mit Hilfe des zweiten Flotationsschrittes auf einen Endpunkt 12 verbessert. Bei den Verfahren gemäß Stand der Technik würde man ausgehend von einem höheren Weißgrad W2 im zweiten Startpunkt 9' auf den Endpunkt 10 kommen, dabei mit einer geringeren Rejektmenge RM 2 arbeiten. Auch die bereits erwähnte Zwischenbehandlung (z.B. Dispergierung) zwischen aufeinander folgenden Flotationsschritten kann zu einer Veränderung des Weißgrades führen. Das ist in dieser Figur 2 nicht dargestellt, da es für das Prinzip der Erfindung nicht wesentlich ist.

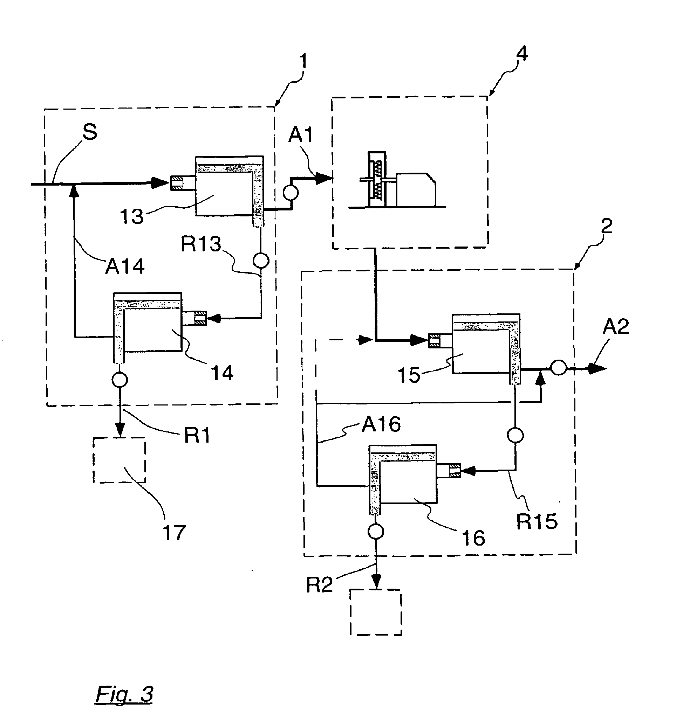

Wie bereits erwähnt wurde, können die Flotationsschritte in Flotationsanlagen durchgeführt werden, die jeweils aus mehreren Stufen bestehen. So zeigt die Fig. 3 ein Beispiel mit zwei Flotationsschritten 1 und 2, welche wiederum jeweils zwei Flotationsstufen enthalten. Die Papierfasersuspension S gelangt bei Durchführung des Flotationsschrittes 1 zunächst in eine Primärflotationsvorrichtung 13. Eine solche Vorrichtung kann aus mehreren direkt hintereinander geschalteten Flotationszellen bestehen, deren Gutstoff jeweils in die nachfolgende Flotationszelle geführt wird, mit Ausnahme des Gutstoffes der letzten Zelle. Eine Flotationsstufe bildet einen gemeinsamen Gutstoff und einen gemeinsamen Rejekt. Der in der Primärflotationsstufe gebildete Flotationsschaum wird als Rejekt R 13 gesammelt und in die Sekundärflotationsvorrichtung 14 eingeführt. Der dort gebildete Flotationsschaum verlässt als Rejekt R1 die Flotationsanlage, kann dann z.B. in einer entsprechenden Anlage 17 entwässert und entsorgt werden. Der in der Sekundärflotationsvorrichtung 14 gebildete Gutstoff A14 wird hier in den Zulauf zur Primärflotationsvorrichtung 13 zurückgeführt. Bei einer solchen Schaltung von Primär- und Sekundärflotationsvorrichtungen werden in der Regel sowohl der Rejekt R 13 der Primärflotationsvorrichtung 13 als auch der Rejekt R1 der Sekundärflotationsvorrichtung. 14 eingestellt oder geregelt. Entscheidend für die Durchführung des erfindungsgemäßen Verfahrens ist die Rejektmenge R1, die gesamthaft in diesem Flotationsschritt gebildet wird. Der Gutstoff A1 der Primärflotationsvorrichtung 13 kann mit besonderem Vorteil vor der erneuten Flotation durch eine Dispergierung behandelt werden. Dazu ist hier eine Dispergeranlage 4 nur angedeutet. Bekanntlich besteht sie üblicherweise aus Entwässerung, Aufheizung, Dispergierung und Verdünnung. Als Zwischenbehandlung zwischen zwei Flotationen hat sie den besonderen Vorteil, die noch nicht ausreichend von den Fasern gelösten Schmutzstoffe frei zu setzen, so dass sie im nachfolgenden Flotationsschritt entfernt werden können.

Die Anlage für den zweiten Flotationsschritt 2 kann im Wesentlichen ähnlich aufgebaut sein wie die für den ersten Flotationsschritt 1. Dabei kann der in der Sekundärflotationsvorrichtung 14, die den Rejekt R15 der Primärflotatonsvorrichtung 15 verarbeitet, gewonnene Gutstoff 16 bereits so gut sein, dass er dem Gutstoff der Primärflotationsvorrichtung 15 zugeführt wird. Andernfalls kann er zur erneuten Flotation in deren Einlauf gelangen.

## Patentansprüche

1. Verfahren zur Entfernung von Störstoffen aus einer wässrigen Papierfasersuspension (S) mit Hilfe mehrerer selektiver Flotationsschritte (1, 2), bei denen der Gutstoff (A1) eines stromaufwärtigen Flotationsschrittes (1) in den Einlauf des stromabwärts folgenden Flotationsschrittes (2) geführt wird und wobei die Störstoffe mit den Rejekten (R1, R2) der Flotationsschritte (1, 2) aus der Papierfasersuspension (S) entfernt werden,
**dadurch gekennzeichnet,**
**dass** die Menge des Rejektes (R1) des stromaufwärtigen Flotationsschrittes (1) deutlich geringer eingestellt wird, als es zur Erzielung einer maximalen Störstoffentfernung erforderlich wäre und dass die Menge des Rejektes (R2) des stromabwärtigen Flotationsschrittes (2) so eingestellt wird, dass der im vorangehenden Flotationsschritt (1) entstandene Verlust (D) an Störstoffentfernung zumindest teilweise wieder ausgeglichen wird.

2. Verfahren nach Anspruch 1,
**dadurch gekennzeichnet,**
**dass** die Flotationsschritte (1, 2) jeweils in einer oder mehreren Flotationsstufen durchgeführt werden.

3. Verfahren nach Anspruch 2,
**dadurch gekennzeichnet,**
**dass** eine Flotationsstufe jeweils einen Rejekt (R 13, R 15) und einen Gutstoff (A 14, A 16) erzeugt.

4. Verfahren nach Anspruch 3,
**dadurch gekennzeichnet,**
**dass** für eine Flotationsstufe mehrere Flotationszellen verwendet werden, die so geschaltete sind, dass der Gutstoff einer stromaufwärtigen Flotationszelle (sofern vorhanden) in den Zulauf einer stromabwärtigen Flotationszelle (sofern vorhanden) geführt wird.

5. Verfahren nach Anspruch 2, 3 oder 4,
**dadurch gekennzeichnet,**
**dass** in mindestens zwei Flotationsstufen gearbeitet wird, wobei der Rejekt (R 13, R 14) der stromaufwärtigen Flotationsstufe in den Zulauf der stromabwärtigen Flotationsstufe geführt wird.

6. Verfahren nach einem der voranstehenden Ansprüche,
**dadurch gekennzeichnet,**
**dass** das Verfahren zwei Flotationsschritte (1, 2) umfasst.

7. Verfahren nach einem der voranstehenden Ansprüche,
**dadurch gekennzeichnet,**
**dass** der Papierfaserstoff zwischen zwei Flotationsschritten (1, 2) dispergiert wird.

8. Verfahren nach Anspruch 7,
**dadurch gekennzeichnet,**
**dass** die Dispergierung bei einer Konsistenz zwischen 15 % und 35 % durchgeführt wird.

9. Verfahren nach Anspruch 7 oder 8,
**dadurch gekennzeichnet,**
**dass** die Dispergierung mit einer chemischen Bleichbehandlung kombiniert wird.

10. Verfahren nach einem der voranstehenden Ansprüche,
**dadurch gekennzeichnet,**
**dass** der stromaufwärtige Flotationsschritt (1) so durchgeführt wird, dass der im Gutstoff (A1) erreichte Weißgrad um mindestens zwei, vorzugsweise 3 bis 5 ISO-% unterhalb des durch entsprechende Rejektmengeneinstellung möglichen Wertes bleibt.

11. Verfahren nach einem der voranstehenden Ansprüche,
**dadurch gekennzeichnet,**
**dass** die Papierfaserstoffsuspension (S) durch Auflösung in einer Auflösetrommel hergestellt wird, die mit einem feststehenden Verdrängerkörper versehen ist und bei einer Konsistenz zwischen 10 % und 30 % betrieben wird.

## Claims

1. Method for removing impurities from an aqueous paper fibre suspension (S) with the aid of a plurality of selective flotation steps (1, 2), in which the accepted stock (A1) of an upstream flotation step (1) is guided into the inlet of the flotation step (2) hollowing downstream, and the impurities being removed with the rejects (R1, R2) of the flotation steps (1, 2) from the paper fibre suspension (S), **characterized in that** the quantity of the reject (R1) of the upstream flotation step (1) is set to be considerably lower than would be required to achieve a maximum impurity removal, and **in that** the quantity of the reject (R2) of the downstream flotation step (2) is set in such a way that the loss (D) of impurity removal produced in the preceding flotation step (1) is compensated for again at least partially.

2. Method according to Claim 1, **characterized in that** the flotation steps (1, 2) are carried out in each case in one or more flotation stages.

3. Method according to Claim 2, **characterized in that** a flotation stage in each case produces a reject (R 13, R 15) and an accepted stock (A 14, A 16).

4. Method according to Claim 3, **characterized in that** a plurality of flotation cells are used for one flotation stage, which flotation cells are connected in such a way that the accepted stock of an upstream flotation cell (if present) is guided into the inlet of a downstream flotation cell (if present).

5. Method according to Claim 2, 3 or 4, **characterized in that** the process is carried out in at least two flotation stages, the reject (R 13, R 14) of the upstream flotation stage being guided into the inlet of the downstream flotation stage.

6. Method according to one of the preceding claims, **characterized in that** the method comprises two flotation steps (1, 2).

7. Method according to one of the preceding claims, **characterized in that** the pulp is dispersed between two flotation steps (1, 2).

8. Method according to Claim 7, **characterized in that** the dispersion is carried out at a consistency between 15% and 35%.

9. Method according to Claim 7 or 8, **characterized in that** the dispersion is combined with a chemical bleach treatment.

10. Method according to one of the preceding claims, **characterized in that** the upstream flotation step (1) is carried out in such a way that the whiteness achieved in the accepted stock (A1) remains at least two, preferably from 3 to 5 ISO% below the value which is possible as a result of corresponding reject-quantity setting.

11. Method according to one of the preceding claims, **characterized in that** the paper fibre suspension (S) is produced by pulping in a drum pulper which is provided with a stationary displacer element and is operated at a consistency between 10% and 30%.

## Revendications

1. Procédé pour l'élimination de contaminants d'une suspension aqueuse de fibres de papier (S) à l'aide de plusieurs étapes de flottation sélectives (1, 2), dans lesquelles on conduit la pâte à papier (A1) d'une étape de flottation amont (1) dans l'entrée de l'étape de flottation suivante aval (2) et dans lequel on élimine les contaminants avec les rejets (R1, R2) des étapes de flottation (1, 2) hors de la suspension de fibres de papier (S), **caractérisé en ce que** l'on règle la quantité du rejet (R1) de l'étape de flottation amont (1) à un niveau nettement plus faible que ce qui serait nécessaire pour obtenir une élimination de contaminants maximale et **en ce que** l'on règle la quantité du rejet (R2) de l'étape de flottation aval (2) de telle manière que la perte (D) d'élimination de contaminants apparue dans l'étape de flottation précédente (1) soit au moins partiellement compensée.

2. Procédé selon la revendication 1, **caractérisé en ce que** l'on effectue les étapes de flottation (1, 2) respectivement dans un ou plusieurs étages de flottation.

3. Procédé selon la revendication 2, **caractérisé en ce qu'**un étage de flottation produit chaque fois un rejet (R13, R15) et une pâte à papier (A14, A16).

4. Procédé selon la revendication 3, **caractérisé en ce que** l'on utilise pour un étage de flottation plusieurs cellules de flottation, qui sont connectées de telle manière que la pâte à papier d'une cellule de flottation amont (s'il y en a une) soit conduite dans l'alimentation d'une cellule de flottation aval (s'il y en a une).

5. Procédé selon la revendication 2, 3 ou 4, **caractérisé en ce que** l'on travaille en au moins deux étages de flottation, dans lequel on conduit le rejet (R13, R14) de l'étage de flottation amont dans l'alimentation de l'étage de flottation aval.

6. Procédé selon l'une quelconque des revendications précédentes, **caractérisé en ce que** le procédé comprend deux étapes de flottation (1, 2).

7. Procédé selon l'une quelconque des revendications précédentes, **caractérisé en ce que** l'on disperse la substance de fibres de papier entre deux étapes de flottation (1, 2).

8. Procédé selon la revendication 7, **caractérisé en ce que** l'on effectue la dispersion à une consistance comprise entre 15 % et 35 %.

9. Procédé selon la revendication 7 ou 8, **caractérisé en ce que** l'on combine la dispersion avec un traitement chimique de blanchiment.

10. Procédé selon l'une quelconque des revendications précédentes, **caractérisé en ce que** l'on effectue l'étape de flottation amont (1) de telle manière que le degré de blanc atteint dans la pâte à papier (A1) reste au moins 2, de préférence 3 à 5 % ISO en dessous de la valeur possible par le réglage de quantité de rejet correspondante.

11. Procédé selon l'une quelconque des revendications précédentes, **caractérisé en ce que** l'on produit la suspension de substance de fibres de papier (S) par désintégration dans un désintégrateur à tambour, qui est pourvu d'un corps déplaceur stationnaire et qui fonctionne à une consistance comprise entre 10 % et 30 %.
